# FASCICULE DE BREVET EUROPEEN

(11) **EP 1 893 443 B1**
(45) Date de publication et mention de la délivrance du brevet: **10.09.2008**
(21) Numéro de dépôt: 06764834.5
(22) Date de dépôt: 02.06.2006
(51) Int. Cl.: B60R 5/04

(54) **AGENCEMENT D'UNE TABLETTE ARRIERE DE VEHICULE AUTOMOBILE COMPRENANT DES MOYENS DE CIRCULATION D'AIR**
ANORDNUNG EINES HINTEREN ABLAGEFACHS EINES AUTOMOBILS MIT LUFTZIRKULATIONSMITTELN
ARRANGEMENT OF A REAR PARCEL SHELF OF A MOTOR VEHICLE COMPRISING AIR CIRCULATING MEANS

(30) Priorité: 16.06.2005 FR 0551648
(43) Date de publication de la demande: 05.03.2008
(73) Titulaire: Renault SAS, 92100 Boulogne Billancourt (FR)
(72) Inventeur: JOSSE, Pascal, F-78500 Sartrouville (FR)
(86) Numéro de dépôt international: PCT/FR2006/050511
(87) Numéro de publication internationale: WO 2006/134287

(56) Documents cités:
- JP-A- 5 238 323
- PATENT ABSTRACTS OF JAPAN vol. 009, no. 176 (M-398), 20 juillet 1985 (1985-07-20) & JP 60 045421 A (NISSAN JIDOSHA KK), 11 mars 1985 (1985-03-11)
- PATENT ABSTRACTS OF JAPAN vol. 009, no. 176 (M-398), 20 juillet 1985 (1985-07-20) & JP 60 045443 A (NISSAN JIDOSHA KK), 11 mars 1985 (1985-03-11)
- PATENT ABSTRACTS OF JAPAN vol. 016, no. 299 (M-1274), 2 juillet 1992 (1992-07-02) & JP 04 081368 A (NISSAN MOTOR CO LTD), 16 mars 1992 (1992-03-16)
- PATENT ABSTRACTS OF JAPAN vol. 008, no. 073 (M-287), 5 avril 1984 (1984-04-05) & JP 58 218414 A (NISSAN JIDOSHA KK), 19 décembre 1983 (1983-12-19)

## Description

L'invention concerne un agencement d'une tablette arrière de séparation d'un habitacle et d'un coffre de véhicule automobile dans lequel une tablette latérale comporte un premier bord longitudinal solidaire d'un élément d'habillage et un deuxième bord longitudinal présentant une forme de marche, tel que décrit dans le document JP-A-05 238323, la paroi horizontale de la marche constituant une surface d'appui pour une tablette centrale, et dans lequel des moyens de circulation d'air sont constitués par un premier flux d'air circulant entre une grille ménagée entre l'habitacle et le coffre, dans la tablette latérale, et une ouverture ménagée à l'intérieur du coffre, sous la surface d'appui de la tablette latérale.

Une tablette arrière de véhicule automobile comporte généralement une tablette centrale prenant appui sur une tablette latérale. Il est par ailleurs nécessaire de prévoir une circulation d'air à l'intérieur du véhicule de façon à équilibrer les différentes pressions, en particulier entre le coffre et l'habitacle. Une grille ménagée, entre l'habitacle et le coffre, dans la tablette latérale ainsi que des orifices portés, à l'intérieur du coffre, par une paroi verticale de la tablette latérale en regard de la tablette centrale permettent une circulation d'air entre le coffre et l'habitacle. Cependant, si la circulation d'air est insuffisante, la répartition des pressions d'air n'est pas homogène, ce qui provoque des bourdonnements désagréables au niveau des oreilles du passager arrière.

Des trous supplémentaires pourraient être ajoutés afin d'augmenter le volume d'air qui circule mais cette solution n'est pas satisfaisante, d'un point de vue esthétique. De plus, il faut que cette circulation d'air supplémentaire se trouve au plus près des passagers arrière, donc des sièges arrière, et soit d'un volume important, de façon à supprimer le bourdonnement.

Afin de pallier ces inconvénients, l'invention a pour objet un agencement de tablette arrière esthétique comportant des moyens de circulation d'air efficaces.

A cet effet, l'invention propose un agencement de tablette arrière du type cité ci-dessus, caractérisé en ce que les moyens de circulation d'air comportent en outre un deuxième flux d'air circulant entre l'habitacle et le coffre au travers :
- d'un premier espace ménagé entre un rebord de la tablette centrale et la paroi verticale de la tablette latérale et
- d'un deuxième espace ménagé sous le rebord de la tablette centrale.

Selon d'autres caractéristiques de l'invention:
- Le deuxième espace est constitué par un évidement ménagé dans la marche de la tablette latérale.
- La surface d'appui de la tablette centrale est répartie de part et d'autre de l'évidement, sous un bord avant et sous un bord arrière de la tablette centrale.
- L'ouverture ménagée sous la surface d'appui est partiellement obturée par une grille.
- Les première et deuxième grille sont formées par une série de lamelles parallèles.

D'autres caractéristiques et avantages de l'invention apparaîtront à la lecture de la description d'exemples de réalisation d'un agencement de tablette arrière en référence aux dessins annexés dans lesquels :
- La figure 1 est une vue en coupe transversale de l'agencement de tablette arrière selon l'invention.
- La figure 2 est une vue en coupe longitudinale de la figure 1.

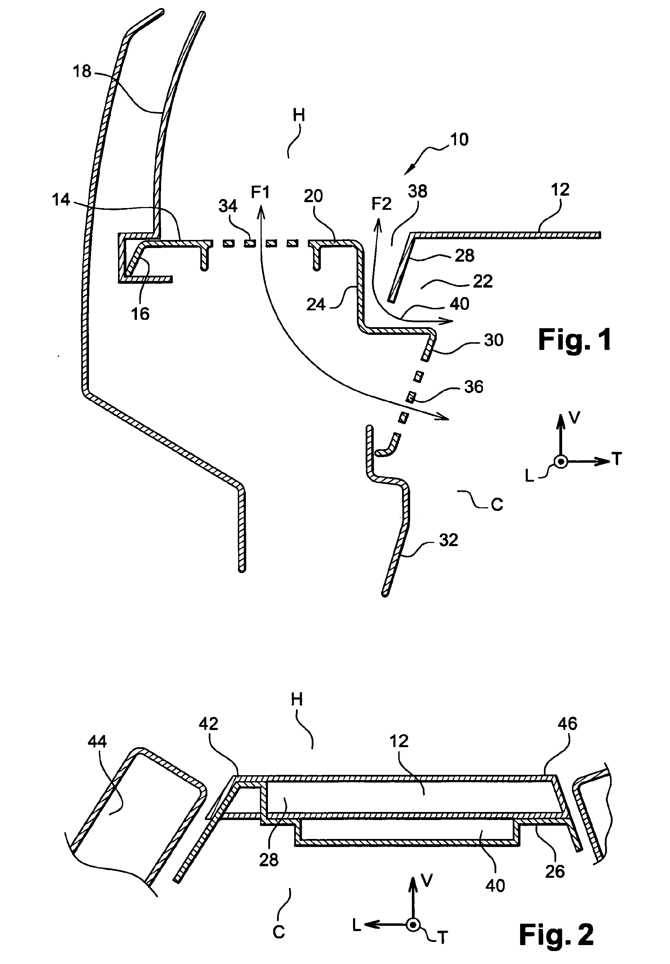

Dans la description qui suit, nous prendrons à titre non limitatif une orientation longitudinale, verticale et transversale indiquée par le trièdre L,V,T des figures 1 et 2. Il sera également pris comme référence une orientation d'avant en arrière correspondant au sens de marche du véhicule et se trouvant de gauche à droite sur les figures.

Tel que représenté à la figure 1, une tablette arrière 10, délimitant un habitacle H et un coffre C du véhicule, comporte une tablette centrale 12 et deux tablettes latérales 14, situées de part et d'autre de la tablette centrale 12. La tablette arrière 10 étant symétrique par rapport à un axe médian longitudinal, seule une moitié de la tablette sera décrite, l'autre étant identique.

Un premier bord longitudinal 16 de la tablette latérale 14 est solidaire d'un élément d'habillage 18 du véhicule, tel qu'une garniture de custode, par exemple. Les moyens de solidarisation peuvent être, par exemple, des moyens d'encliquetage. Un deuxième bord longitudinal 20 de la tablette latérale 14 forme une marche 22, comportant une paroi verticale 24 et une paroi horizontale 26 formant une surface d'appui destinée à recevoir un rebord sensiblement vertical 28 de la tablette centrale 12. La surface d'appui 26 se prolonge vers le bas par une paroi 30 s'étendant vers une pièce d'habillage 32 du coffre C.

Des premiers moyens de circulation sont prévus sur la tablette latérale : une première grille 34 est agencée sur la tablette latérale 14 entre l'habitacle H et le coffre C et une ouverture est ménagée à l'intérieur du coffre C sous la surface d'appui 26, dans la paroi 30, afin de permettre le passage d'un premier flux d'air F1. L'ouverture peut être partiellement obturée par une deuxième grille 36. Les grilles 34 et 36 peuvent être formées par une série de lamelles parallèles.

Afin d'augmenter le volume d'air déplacé, des deuxièmes moyens de circulation d'air sont aussi prévus. Un premier espace 38 est ainsi ménagé entre la paroi verticale 24 de la marche 22 de la tablette latérale 14 et le rebord 28 de la tablette centrale 12. Un évidement 40 dans la marche 22 de la tablette latérale 14 permet de ménager un deuxième espace 40 sous le rebord 28 de la tablette centrale 12. Un deuxième flux F2 peut ainsi circuler entre l'habitacle H et le coffre C à travers les deux espaces 38 et 40.

Tel que représenté à la figure 2, il peut être prévu que la surface d'appui 26 soit répartie de part et d'autre de l'évidement 40 de manière qu'un bord avant 42, situé à proximité d'un siège 44 et un bord arrière 46 de la tablette centrale 12 soit supportés par la surface d'appui 26 de la tablette latérale 14. Plus particulièrement, la tablette arrière 10 se trouve en position haute, c'est-à-dire dans le prolongement d'une partie supérieure des dossiers de sièges 44.

Les deuxièmes moyens de circulation d'air présentent donc l'avantage d'être peu visibles et donc esthétiques. En outre ils permettent également de déplacer un plus grand volume d'air entre l'habitacle et le coffre à proximité des sièges arrière du véhicule, ce qui permet de réduire les problèmes de bourdonnement pour le passager arrière.

## Revendications

1. Agencement d'une tablette arrière (10) de séparation d'un habitacle (H) et d'un coffre (C) de véhicule automobile dans lequel une tablette latérale (14) comporte un premier bord longitudinal (16) solidaire d'un élément d'habillage (18) et un deuxième bord longitudinal (20) présentant une forme de marche (22), la paroi horizontale (26) de la marche (22) constituant une surface d'appui pour une tablette centrale (12), et dans lequel des moyens de circulation d'air sont constitués par un premier flux d'air (F1) circulant entre une grille (34) ménagée entre l'habitacle (H) et le coffre (C), dans la tablette latérale (14) et une ouverture ménagée, à l'intérieur du coffre (C), sous la surface d'appui (26) de la tablette latérale (14), **caractérisé en ce que** les moyens de circulation d'air comportent en outre un deuxième flux d'air (F2) circulant entre l'habitacle (H) et le coffre (C) au travers :
- d'un premier espace (38) ménagé entre un rebord (28) de la tablette centrale (12) et la paroi verticale (24) de la tablette latérale (14) et
- d'un deuxième espace (40) ménagé sous le rebord (28) de la tablette centrale (12).

2. Agencement d'une tablette arrière (10) selon la revendication 1, **caractérisé en ce que** le deuxième espace (40) est constitué par un évidement ménagé dans la marche (22) de la tablette latérale (14).

3. Agencement d'une tablette arrière (10) selon l'une quelconque des revendications précédentes, **caractérisé en ce que** la surface d'appui (26) de la tablette centrale (12) est répartie de part et d'autre de l'évidement (40), sous un bord avant (42) et sous un bord arrière (46) de la tablette centrale (12).

4. Agencement d'un tablette arrière (10) selon l'une quelconque des revendications précédentes, **caractérisé en ce que** l'ouverture ménagée sous la surface d'appui (26) est partiellement obturée par une grille (36).

5. Agencement d'une tablette arrière (10) selon la revendication précédente, **caractérisé en ce que** les première (34) et deuxième grille (36) sont formées par une série de lamelles parallèles.

## Claims

1. Arrangement of a rear parcel shelf (10) separating a passenger compartment (H) from the boot (C) of a motor vehicle, in which a lateral shelf (14) has a first longitudinal edge (16) connected to a trim element (18) and a second longitudinal edge (20) in the form of a step (22), the horizontal wall (26) of the step (22) constituting a bearing surface for a central shelf (12), and in which air circulating means consist of a first air flow (F1) circulating between a grille (34) provided between the passenger compartment (H) and the boot (C) in the lateral shelf (14) and an opening provided inside the boot (C) under the bearing surface (26) of the lateral shelf (14), **characterized in that** the air circulating means also comprise a second air flow (F2) circulating between the passenger compartment (H) and the boot (C) through:
- a first space (38) provided between a lip (28) of the central shelf (12) and the vertical wall (24) of the lateral shelf (14) and
- a second space (40) provided under the lip (28) of the central shelf (12).

2. Arrangement of a rear parcel shelf (10) according to Claim 1, **characterized in that** the second space (40) consists of a gap provided in the step (22) of the lateral shelf (14).

3. Arrangement of a rear parcel shelf (10) according to either one of the preceding claims, **characterized in that** the bearing surface (26) of the central shelf (12) is distributed on either side of the gap (40), under a front edge (42) and under a rear edge (46) of the central shelf (12).

4. Arrangement of a rear parcel shelf (10) according to any one of the preceding claims, **characterized in that** the opening provided under the bearing surface (26) is partially closed off by a grille (36).

5. Arrangement of a rear parcel shelf (10) according to the preceding claim, **characterized in that** the first grille (34) and the second grille (36) are formed by a series of parallel slats.

## Patentansprüche

1. Anordnung einer hinteren Platte (10) für die Trennung eines Fahrgastraums (H) und eines Kofferraums (C) eines Kraftfahrzeugs, wobei eine Seitenplatte (14) einen ersten longitudinalen Rand (16), der mit einem Verkleidungselement (18) fest verbunden ist, und einen zweiten longitudinalen Rand (20), der eine Stufenform (22) aufweist, enthält, wobei die horizontale Wand (26) der Stufe (22) eine Abstützoberfläche für eine Mittelplatte (12) bildet und wobei Luftzirkulationsmittel durch einen ersten Luftstrom (F1) gebildet sind, der zwischen einem zwischen dem Fahrgastraum (H) und dem Kofferraum (C) ausgebildeten Gitter (34) in der Seitenplatte (14) und einer Öffnung, die in dem Kofferraum (C) unter der Abstützfläche (26) der Seitenplatte (14) ausgebildet ist, zirkuliert, **dadurch gekennzeichnet, dass** die Luftzirkulationsmittel außerdem einen zweiten Luftstrom (F2) enthalten, der zwischen dem Fahrgastraum (H) und dem Kofferraum (C) zirkuliert durch:
- einen ersten Zwischenraum (38), der zwischen einer Kante (28) der Mittelplatte (12) und der vertikalen Wand (24) der Seitenplatte (14) ausgebildet ist, und
- einen zweiten Zwischenraum (40), der unter der Kante (28) der Mittelplatte (12) ausgebildet ist.

2. Anordnung einer hinteren Platte (10) nach Anspruch 1, **dadurch gekennzeichnet, dass** der zweite Zwischenraum (40) durch eine Aussparung gebildet ist, die in der Stufe (22) der Seitenplatte (14) ausgebildet ist.

3. Anordnung einer hinteren Platte (10) nach einem der vorhergehenden Ansprüche, **dadurch gekennzeichnet, dass** die Abstützoberfläche (26) der Mittelplatte (12) beiderseits der Aussparung (40) unter einem vorderen Rand (42) und unter einem hinteren Rand (46) der Mittelplatte (12) verteilt ist.

4. Anordnung einer hinteren Platte (10) nach einem der vorhergehenden Ansprüche, **dadurch gekennzeichnet, dass** die unter der Abstützoberfläche (26) ausgebildete Öffnung durch ein Gitter (36) teilweise verschlossen ist.

5. Anordnung einer hinteren Platte (10) nach dem vorhergehenden Anspruch, **dadurch gekennzeichnet, dass** das erste Gitter (34) und das zweite Gitter (36) jeweils durch eine Reihe paralleler Lamellen gebildet sind.
